# EUROPEAN PATENT APPLICATION

(11) **EP 3 951 623 A1**
(43) Date of publication of application: **09.02.2022**
(21) Application number: 20189267.6
(22) Date of filing: 03.08.2020
(51) Int. Cl.: G06F 16/955

(54) **METHOD AND APPARATUS FOR DEFINING AND COMMUNICATING A UNIQUE IDENTIFIER**

(71) Applicant: Revell, Ashley, West Malling, Kent ME19 6NN (GB)
(72) Inventor: Revell, Ashley, West Malling, Kent ME19 6NN (GB)
(74) Representative: Downing, Michael Philip

(57) **Abstract**

Shortened links are useful but are difficult for human users to remember. We disclose a method of encoding a character string, comprising the steps of receiving from a user the character string, storing the character string in a machine-readable data store, storing an encoded string in combination with the character string, wherein the encoded string comprises a sequence of characters from a standard character set, wherein each character is presented in a one colour selected from a predetermined group of colours. This allows a unique code to be created consisting of a short string of characters, each in a colour. The wider character set that is (effectively) created by the use of multiple colours means that the length of the encoded string can be reduced whilst still retaining an adequate number of potential combinations. This shorter string is more easily remembered by a human user, especially when made up of four characters in four colours.

## Description

### FIELD OF THE INVENTION

The present invention relates to a method and apparatus for creating and communicating a unique identifier.

### BACKGROUND ART

Computer networks such as the World Wide Web are now ubiquitous, providing access to a wide range of resources online. Each resource or page has a unique address, properly known as a Uniform Resource Locator ("URL") or Uniform Resource Identifier; these are typically a concatenation of the server name or location, followed by the location of the file, page or other resource on the server, together with any query or fragment components. The complete definition of URLs is in RFC 1738 of 1994, and can be found at at https://tools.ietf.org/html/rfc1738.

URLs can be unmanageably long, however. As a result, URL shortening has arisen; this is a technique in which a web address may be made substantially shorter and still direct to the required page. This is achieved by using a redirect which links to the web page that has a long URL. Often the redirect domain name is significantly shorter than the original one, but this is not necessarily so. There are various reasons for using a URL shortening service, including creating a URL that can be sent via a messaging technology that limits the number of characters in a message (for example SMS or Twitter), for reducing the amount of typing required if the reader is copying a URL from a print source, for making it easier for a person to remember, or for the intention of a providing permanent link to a specific resource. Other uses of URL shortening are to "beautify" a link by allowing the user to choose a custom link (if it is still available), and to track clicks.

Significant URL shortening services in use at the present time include TinyURL.com, bit.ly and t.co.

### SUMMARY OF THE INVENTION

Shortened links are useful, but are still difficult for human users to remember. For example, https://bitly.com/1sNZMwL redirects to https://en.wikipedia.org/wiki/Bitly, but the latter is probably easier for a human user to remember. Generally, existing URL shortening services are effective at creating a shorter link, but are unlikely to create a link that a human user can recall and communicate to other human users unless a suitable custom link is still available.

The present invention provides a method of encoding a character string, which may be implemented on a suitable computer or the like, comprising the steps of receiving from a user the character string, storing the character string in a machine-readable data store, storing an encoded string in combination with the character string, wherein the encoded string comprises a sequence of characters from a standard character set, wherein each character is presented in a one colour selected from a predetermined group of colours, storing the encoded string in combination with the character string.

This allows a unique code to be created consisting of a short string of characters, each in a colour. The wider character set that is (effectively) created by the use of multiple colours means that the length of the encoded string can be reduced whilst still retaining an adequate number of potential combinations. This shorter string is more easily remembered by a human user. Therefore, the use of this method within the technical parts of the communication chain assists with the human recollection processes that form part of the overall chain and thus makes the communication process as a whole more reliable.

The character string may be, for example, a URL. However, the invention can be used to encode other character strings if desired.

The encoded string preferably comprises at least three characters as this provides a suitably large number of combinations. To keep the number of characters to an easily memorable number, we prefer that the encoded string comprises five characters or fewer. Four or five is a relatively optimal number.

The predetermined group of colours preferably comprises four colours or fewer, to ensure that the perception and recollection of the colours can be distinctive. A suitable group of four colours can be three primary colours and one further colour such as (for example) black, a primary colour from a different colour group, or a further distinctive colour. The primary colours can be from the group of additive primary colours or the group of subtractive primary colours, or a combination as noted above; thus suitable groups of colours include:
Red, green, blue and yellow
Red, green, blue and black
Red, yellow, blue and black
Red, yellow, green and black
Cyan, magenta, yellow and black
Blue, purple, yellow and black.

Some users prefer to customise the encoded string. To permit this, we prefer that the user can be permitted to propose an encoded string, in which case the proposed encoded string is compared to the encoded strings already stored in the machine-readable data store, and if the proposed encoded string is not already stored in the machine-readable data store then the proposed encoded string is adopted as the encoded string. Alternatively, or in addition, the user can be permitted to propose a sequence of characters, following which the proposed sequence of characters is compared to the sequences of characters already stored in the machine-readable data store, and the user is offered an opportunity to select an encoded string from a group consisting of encoded strings comprising the proposed sequence of characters in colour combinations not already stored in the machine-readable data store, if any.

We prefer that the user is allocated a user account, the encoded string is associated with the user account, and the user is permitted to log in to the user account, select the or an encoded string associated with the user account and provide a replacement character string, following which the replacement character string is stored in combination with the encoded string instead of the character string. This allows user to retain control of the encoded string and update the URL that is associated with it over time.

### BRIEF DESCRIPTION OF THE DRAWINGS

An embodiment of the present invention will now be described by way of example, with reference to the accompanying figures in which;
Figure 1 illustrates an encoded character string according to the present invention;
Figure 2 shows a schematic layout of the physical embodiment of the present invention;
Figure 3 shows the content and organisation of a data store according to the present invention;
Figure 4 shows a process flow of the present invention for creating a new encoding, and
Figure 5 shows a process flow of the present invention for looking up an existing encoding.

### DETAILED DESCRIPTION OF THE EMBODIMENTS

This invention relates to creating a combination of letters, numbers and characters, in different colour options, in a sequence to create a unique code. Users can register these codes at a suitable website and attribute to them a link to a specified URL. In a converse manner, it is possible to redirect to the URL attributed to the code by inputting it at the website in question. This 4 letter/colour code is a unique identifier that can be easily communicated and memorised.

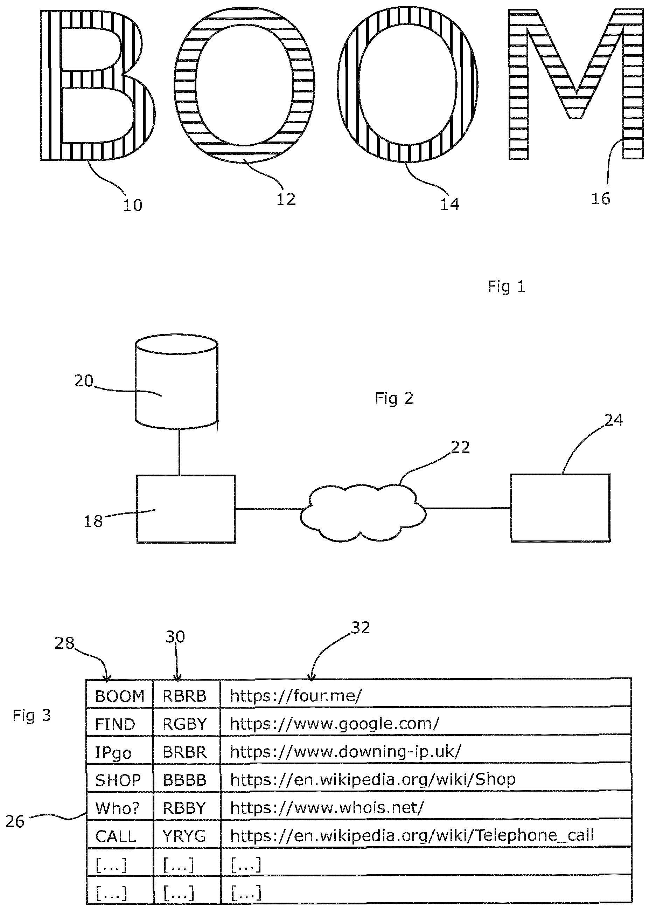

Figure 1 shows an example. A 4 character sequence is used, expressed in 2 colour options. Thus, the encoded string consists of a red capital letter B 10, a blue capital O 12, a red capital O 14, and a blue capital M 16. Figure 1 uses conventional heraldic hatching to indicate the different colours in use, but a typical device display will be able to show the colours in the conventional manner. In other examples, a sequence comprising a different number of characters and colours could be used.

The characters available on a standard western keyboard are:
10 digits: 0123456789
26 lower case letters: abcdefghijklmnopqrstuvwxyz
26 upper case letters: ABCDEFGHIJKLMNOPQRSTUVWXYZ
32 special characters: '∼!@#$%^&*()-_=+[]\{}|;':",./<>?

This gives a total of 94 characters. Using 4 colour options and a sequence of 4 such characters allows for (94x4)⁴, i.e. 19,987,173,376 different combinations. As of August 2018, the Bit.ly URL shortener service had shortened around 37.5 billion URLs, so a range of approximately 20 billion is a generally useful breadth of address space. Extending this to five characters, still more memorable than Bit.ly's usual seven characters, allows a total of approximately 7x10¹² combinations as compared to the 3x10¹² available via Bit.ly's 7-character string of numbers and letters.

The use of a sequence of 4 or more characters and 4 colours is (in our opinion) advantageous due to the number of combinations it affords. If only three characters are used then the number of colour options required to give a useful encoding space becomes significant and users may have difficulty remembering the specific colours of the characters in sequence, or distinguishing specific colours on a display, such as between violet and purple, or navy and blue.

Equally, 5 characters and 3 colours allow for 2x10¹² combinations, so should be adequate and is likely to be sufficiently memorable. However, recollection is likely to be assisted if users know that the number of available colours is the same as the number of characters, and a colour set of 3 primary colours plus one more is especially convenient, so a 4 character/4 colour encoding is generally preferred.

We prefer that the colours used are primary colours, defined at https://simple.wikipedia.org/wiki/Primary colour. Primary colours are usually defined as sets of colours that can be combined to make a useful range of colours; for our purposes what is important is that they are easily distinguishable and memorable. For additive combinations of colours, as in overlapping projected lights or in television and computer screens, the primary colours normally used are red, green, and blue. For subtractive combination of colours, as in mixing of pigments or dyes for printing, the CMYK set of primaries is often used, i.e. cyan, magenta, yellow, and black. Other sets include the RYB system of red, yellow, blue, especially used by artists, and red, yellow, green and black. In this context, these primary colours are preferable as they are easily memorable and unlikely to be confused with each other. Together, these sets imply that that most memorable colours will be those selected from the group consisting of red/magenta, green, blue/cyan, yellow, and black.. Any suitable set of distinctive colours will suffice, of course.

Figure 2 shows the physical arrangement of the system. A processor unit 18 has read/write access to a storage unit 20 and access via the web or other computer network 22 to a user device 24. The processor 18 provides a web page to the user's device 24 which is displayed on the device 24 for the user to interact with. Through the web page, the user can submit a code to be looked up, a new URL to be encoded, and (if desired) preferences as to the code content.

The processor controls a database 26, a small part of which is shown in figure 3. In this example, each record comprises three entries, being the letters of the encoded string 28, the colour sequence 30, and the URL 32. The letters 28 can be stored as a simple four-character text string. The colours, in this case chosen from the group Red (R), Green (G), Blue (B) and Yellow (Y), as shown stored as their colour codes R, G, B or Y which allows them also to be stored as a four-character text string. The URLs are stored in the usual manner as (potentially long) text strings. Other encoding formats could of course be used to store the characters, colours and URLs, such as hex triplets, colour names or the like in respect of the colour information.

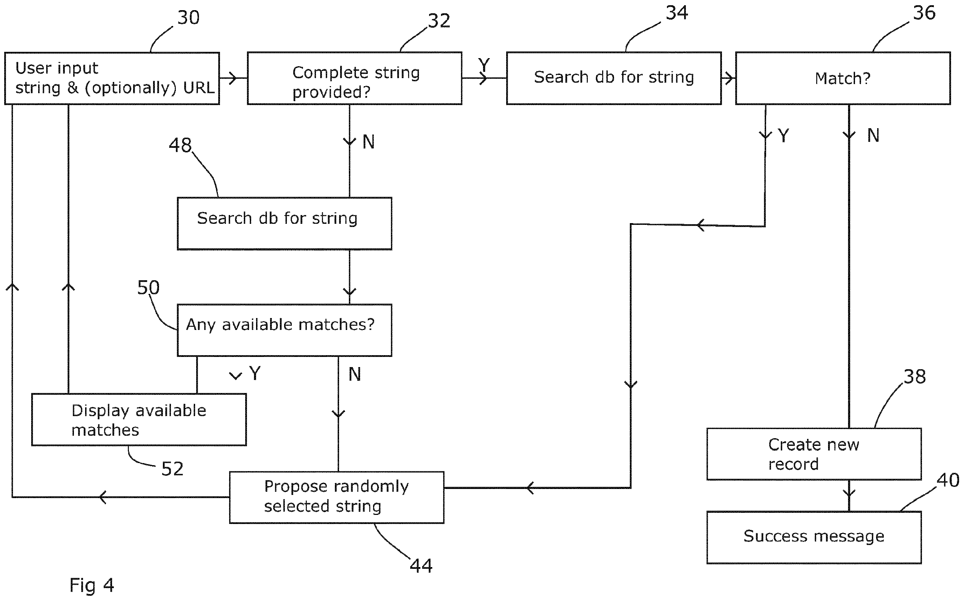

Figure 4 shows the process sequence for creating a new encoded string according to one example of the present invention. Starting at the top left, a logged-in user inputs a preferred encoded string consisting of a sequence of letters and/or colour sequence (30), and (optionally) a URL to be associated with that string. If the user has provided both a preferred string and colour combination (32), then the processor 18 searches the database 26 for that encoded string and colour combination (34); if there is no match for the complete string (36) then a new record is created (38) for that encoded string/colour combination, and a success message (40) is returned to the user confirming that the encoded string has been allocated to their user account.

If the processor 18 finds a match for the string and the colour combination (42), then the user is provided with an invitation message (44) suggesting similar strings and/or colour combinations that are available, or a pseudorandomly generated encoded string, and asking them to choose one or suggest a different string/colour sequence.

If the user provides some or all of a preferred string (46), but less than a complete string and colour sequence, then the database is searched (48) for strings that match the partial string provided by the user. If any are available (50) then an invitation message is displayed (52) offering the remaining available strings/colour sequences that match the user's preference. If there are none then the first invitation message offering a pseudorandomly generated encoded string for the user to approve is displayed (44).

At the invitation message (44 or 52), the user can choose to accept the proposed strings (or one of them if multiple matches are proposed), or submit a fresh string. This is then treated as a new user input (30), and the process restarts using the previously-submitted URL and the freshly-submitted or chosen string. This allows for the possibility that a different user has accessed the service in the time interval since the combination was checked. The process thus loops until an available string is selected and the success message (4) can be displayed. This results in the encoded string being allocated to that user.

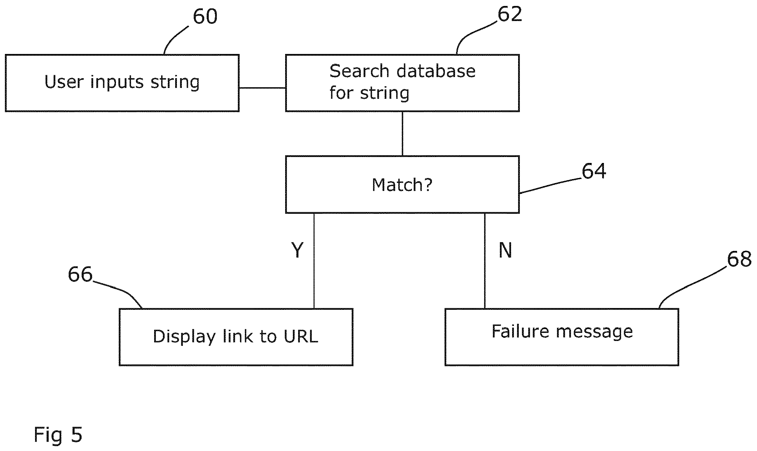

That encoded string is then under the control of that user account. The user can attribute a URL (or other character string) to it. Subsequently, if they wish, they can allocate a new URL or other character string to the code. Therefore each code links to a single URL. This URL is chosen by the owner of the code, who can decide to change the URL the code points to. However, each code can only ever point to a single URL at any one time. Figure 5 shows the process sequence for looking up an existing encoded sequence. A string (including its colour combination) is provided to the system by the user (60), and the processor 18 searches the database 26 (62). If a match is found (64) then a link to the URL is displayed for the user to follow (66). Alternatively, the browser page could redirect to the linked URL or open a fresh page or tab for the URL, but it may be preferable to provide a link so that the user can review the destination and assure themselves that they wish to follow the link.

If no match is found then a failure message is displayed (68), informing the user that no URL is stored for that string/colour combination.

Thus, the present invention provides an easily-recalled encoding for a potentially long an unmemorable URL. It will of course be understood that many variations may be made to the above-described embodiment without departing from the scope of the present invention.

## Claims

1. A method of encoding a character string, comprising the steps of;
receiving from a user the character string and storing the character string in a machine-readable data store;
storing an encoded string in combination with the character string;
wherein the encoded string comprises a sequence of characters from a standard character set, wherein each character is presented in a one colour selected from a predetermined group of colours.

2. A method according to claim 1 in which the character string is a uniform resource locator.

3. A method according to claim 1 or claim 2 in which the encoded string comprises at least three characters.

4. A method according to any one of the preceding claims in which the encoded string comprises five characters or fewer.

5. A method according to any one of the preceding claims in which the predetermined group of colours comprises four colours or fewer.

6. A method according to any one of claims 1 to 4 in which the predetermined group of colours comprises four colours being three primary colours and black.

7. A method according to claim 6 in which the primary colours are selected from the additive primary colours and the subtractive primary colours.

8. A method according to any one of the preceding claims in which the predetermined group of colours includes one of the following groups of colours:
Red, green, blue and yellow
Red, green, blue and black
Red, yellow, blue and black
Red, yellow, green and black
Cyan, magenta, yellow and black
Blue, purple, yellow and black.

9. A method according to any one of the preceding claims in which
the user is permitted to propose an encoded string;
the proposed encoded string is compared to the encoded strings already stored in the machine-readable data store;
if the proposed encoded string is not already stored in the machine-readable data store then the proposed encoded string is adopted as the encoded string.

10. A method according to any one of the preceding claims in which
the user is permitted to propose a sequence of characters;
the proposed sequence of characters is compared to the sequences of characters already stored in the machine-readable data store;
the user is offered an opportunity to select an encoded string from a group consisting of encoded strings comprising the proposed sequence of characters in colour combinations not already stored in the machine-readable data store, if any.

11. A method according to any one of the preceding claims in which
the user is allocated a user account
the encoded string is associated with the user account; and
the user is permitted to:
i. log in to the user account
ii. select the or an encoded string associated with the user account
iii. provide a replacement character string;
following which the replacement character string is stored in combination with the encoded string instead of the character string.

12. Apparatus comprising a processor, a data store to which the processor has access, and a network connection allowing communication with the processor by an external user, the processor being programmed to encode a character string according to the method set out in any one of the preceding claims.
